# EUROPEAN PATENT APPLICATION

(11) **EP 3 002 178 A1**
(43) Date of publication of application: **06.04.2016**
(21) Application number: 15187158.9
(22) Date of filing: 28.09.2015
(51) Int. Cl.: B62D 6/04, B62D 15/02, B60W 30/12, B62D 5/04

(54) **LANE DEPARTURE STEERING CORRECTION WITH ROAD CAMBER AND CROSSWIND COMPENSATION**

(30) Priority: 03.10.2014 US 201414505781
(71) Applicant: Delphi Technologies, Inc., Troy, MI 48007 (US)
(72) Inventor: CHIA, Michael I., Cicero, Indiana 46034 (US)
(74) Representative: Delphi France SAS

(57) **Abstract**

A steering assist system (12) configured to assist an operator (14) to steer a vehicle (10) includes a torque sensor (24), a location device (40), and a controller (48). The torque sensor (24) is configured to output a torque signal (26) indicative of a lateral force (20) experienced by the vehicle (10). The location device (40) is configured to determine a lateral position (42) of the vehicle (10) relative to a roadway (16). The controller (48) configured to determine a steering correction (46) to steer the vehicle (10) toward a center of a roadway lane (18). The steering correction (46) is based on the torque signal (26) and the lateral position (42).

## Description

### TECHNICAL FIELD OF INVENTION

This disclosure generally relates to vehicle steering assistance, and more particularly relates providing a steering correction to steer the vehicle toward a center of the roadway lane based on a steering torque signal to compensate for road camber and crosswinds.

### BACKGROUND OF INVENTION

It is known to equip a vehicle with a lane departure prevention (LDP) system whereby automatic corrective steering is applied when a so equipped host vehicle approaches and/or is about to depart a roadway lane boundary. How much or how little steering correction is required to return the host vehicle back into the lane is dependent on several factors including how fast the vehicle is departing laterally, and how close the vehicle is to the lane boundary.

Road camber or road surface crowning (or similarly super-elevation or road banking) is present on many roadways to drain surface water away from the roadway lanes. The camber angle can change depending on the lane being occupied, and as different sections of the roadway are traveled, so it is variable and can influence a vehicle's reaction to an automated steering correction. Crosswinds also place a lateral force on the vehicle that can influence a vehicle's reaction to an automated steering correction. Compensating a steering correction for road camber and crosswinds using yaw and lateral acceleration signals has been proposed, but poor signal-to-noise ratios and lagging sensor response times have limited the performance improvement when using these sensors. An improved way to compensate LDP system steering corrections for variations in road camber and crosswinds is needed.

### SUMMARY OF THE INVENTION

Described herein are a system and a method for providing a steering correction to assist an operator of a vehicle with steering the vehicle to keep the vehicle in the center of a roadway lane. A measured torque present in the steering mechanism is used to compensate the steering correction for a lateral force experienced by the vehicle due to, for example, roadway camber and/or crosswind.

In accordance with one embodiment, a steering assist system configured to assist an operator to steer a vehicle is provided. The system includes a torque sensor, a location device, and a controller. The torque sensor is configured to output a torque signal indicative of a lateral force experienced by the vehicle. The location device is configured to determine a lateral position of the vehicle relative to a roadway. The controller configured to determine a steering correction to steer the vehicle toward a center of a roadway lane. The steering correction is based on the torque signal and the lateral position.

In another embodiment of the system, a baseline-correction-magnitude of the steering correction is increased when the steering correction is directed in opposition to the lateral force, and is decreased when the steering correction is directed in cooperation with the lateral force.

In yet another embodiment, a method of assisting an operator to steer a vehicle is provided. The method includes the step of receiving a torque signal from a torque sensor. The torque signal is indicative of a lateral force experienced by the vehicle. The method also includes the step of determining a lateral position of the vehicle relative to a roadway lane. The method also includes the step of determining a steering correction to steer the vehicle toward a center of the roadway lane. The steering correction is based on the torque signal and the lateral position.

In yet another embodiment of the method, determining the steering correction includes increasing a baseline-correction-magnitude when the steering correction is directed in opposition to the lateral force, and decreasing the baseline-correction-magnitude when the steering correction is directed in cooperation with the lateral force.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of a vehicle equipped with a LDP system and traveling a roadway in accordance with one embodiment;
Fig. 2 is a schematic diagram of the LDP system of Fig. 1 in accordance with one embodiment;
Fig. 3 is a graph of signals present in the system of Fig. 1 in accordance with one embodiment; and
Fig. 4 is a flowchart of a method performed by the system of Fig. 1 in accordance with one embodiment.

### DETAILED DESCRIPTION

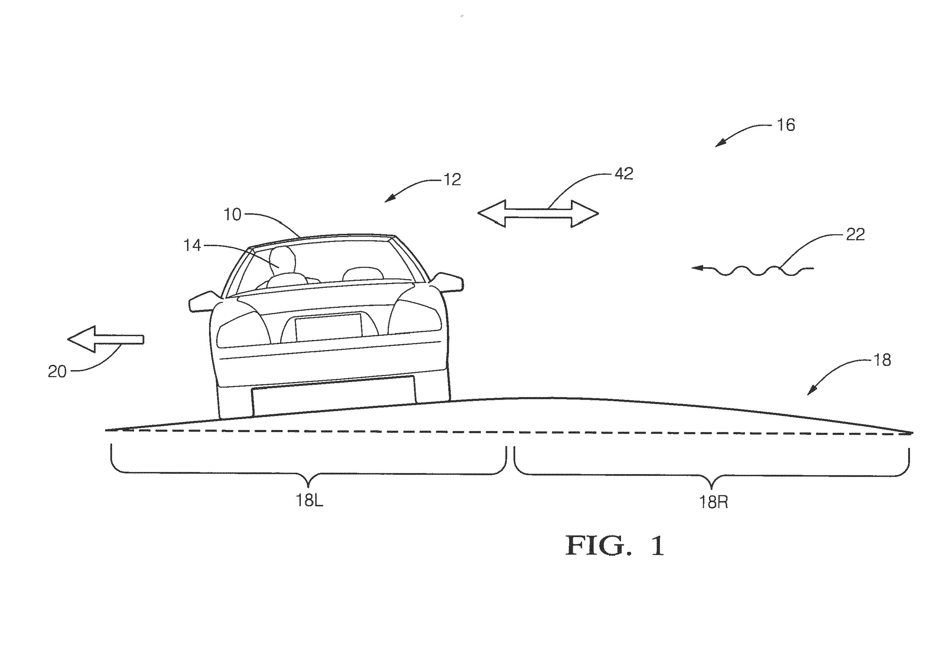

Fig. 1 illustrates a non-limiting example of a vehicle 10 equipped with a steering assist system, hereafter referred to as the system 12. In general, the system 12 is configured to assist an operator 14 to steer the vehicle 10 along a roadway 16. As will be explained in more detail below, the system 12 is particularly configured to assist the operator 14 with keeping the vehicle 10 centered in a particular roadway lane, for example a left lane 18L or a right lane 18R.

Roadways are often crowned so that water drains off the roadway. The angle or camber of a lane, in cooperation with gravity, will typically cause the vehicle 10 to experience a lateral force 20. In this example, the vehicle 10 is traveling in the left lane 18L, and the camber of the left lane 18L is such that the lateral force 20 is directed to the left. If the vehicle 10 were traveling in the right lane 18R, then the lateral force caused by the camber of the right lane 18R would be directed to the right.

The vehicle 10 may be subjected to a crosswind 22 that can also cause the vehicle to experience a lateral force. In this example, the forces caused by the camber of the left lane 18L and the crosswind 22 may combine to increase the magnitude of the lateral force 20. By contrast, if the vehicle 10 were traveling in the right lane 18R, the lateral force due to gravity would be directed against the lateral force due to the crosswind 22, so the magnitude of the lateral force experienced by the vehicle 10 may be reduced, or the opposing forces may possibly cancel each other.

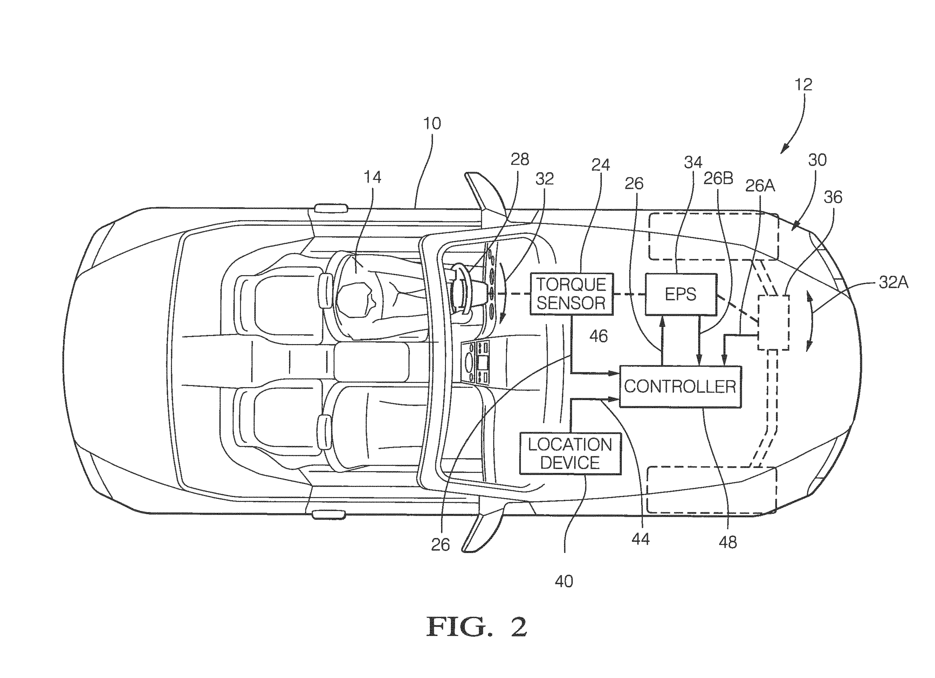

Fig. 2 illustrates a non-limiting example of the system 12 which is understood to be installed in the vehicle 12. The system 12 includes a torque sensor configured to output a torque signal 26 indicative of the lateral force 20 experienced by the vehicle 10. In one embodiment of the system 12, the hand-wheel 28 is mechanically coupled to the steering-wheels 30 by, for example, a steering shaft, as will be recognized by those in the art. For the mechanically coupled configuration, the torque sensor 24 may be configured to determine a steering torque 32 applied to the hand-wheel 28 of the vehicle 10 by an operator 14 of the vehicle 10 in opposition to the lateral force 20. That is, the lateral force 20 experienced by the vehicle 10 causes the operator 14 to exert or apply the steering torque 32 to the hand-wheel 28 so that the vehicle 10 travels along or toward the center of the lane occupied by the vehicle 10. If the torque signal 26 is filtered and/or integrated over time, the torque signal 26 can be used as an indicator of the direction and magnitude of the lateral force 20. In this example, the operator 14 can be characterized as being part of the system 12, which is sometimes referred to as a driver-in-the-loop system. Even if the vehicle 10 is equipped with hydraulic type power steering, the operator 14 will still need to apply a relatively constant steering torque to keep the vehicle centered in the lane, and a measurement of this steering torque can be used as an indicator of the lateral load.

Some mechanical steering systems (i.e. steering systems with mechanical coupling between the hand-wheel 28 and the steering-wheels 30) are equipped with an electric power steering (EPS) unit as illustrated in Fig. 2, and hereafter referred to as the steering actuator 34. The steering actuator 34 may be configured to, on average, null or zero the steering torque 32 that must be provided by the operator 14 to keep the vehicle 10 traveling in the center of the roadway lane. For this case, a steering box 36 may be equipped with a torque sensor similar to the torque sensor 24, and configured to output a torque signal 26A indicative of the lateral force 20. Alternatively, the steering actuator 34 may be configured to output a torque signal 26B based on a torque sensor within the steering actuator 34, or based on the amount of current applied to an electric steering actuator (not shown) within the steering actuator 34. Either way, the system 12 is able to determine an indication of the lateral force 20.

In another embodiment of the system 12, there may be no mechanical connection between the hand-wheel 28 and the steering-wheels 30. Such systems are sometimes referred to as steer-by-wire systems, which may be part of an automated steering system. Since there is no mechanical connection between the hand-wheel 28 and the steering-wheels 30, using the torque sensor 24 to determine an indication of the lateral force 20 may not be possible. In this case, the lateral force may be determined by a torque sensor configured to determine a steering torque 32A applied to the steering box 36 of the vehicle by the steering actuator 34 of the vehicle 10 in opposition to the lateral force 20.

In order for the system 12 to determine where in the roadway 16 the vehicle is traveling, the system 12 includes a location device 40 configured to determine a lateral position 42 (Fig. 1) of the vehicle relative to a roadway lane (e.g. the left lane 18L or the right lane 18R). As used herein, information about the lateral position may also include information related to the rate at which the vehicle 10 is departing from the center of the roadway lane which is also known as lateral rate. In one embodiment, the location device 40 may be an imaging device (i.e. a camera) configured to detect the location of objects (not shown) along the roadway suitable for determining the lateral position 42 of the vehicle. The suitable objects may include lane markers (i.e. paint strips), curbs, guardrails, or a substantial change in appearance of the ground around the vehicle 10 corresponding to the edge of the roadway 16. Alternatively, the roadway 16 may be equipped with devices that can't be readily seen, but are detectable by equipment known in the automated steering arts. By way of another non-limiting alternative, the locating device may include a global positioning system (GPS) device and/or electronic horizon systems (provides information about the road ahead of the present position) configured to determine the lateral position 42 of the vehicle 10. It is contemplated that automated driving systems will use, but will not be limited to, a combination of the alternatives described above to determine the lateral position 42 of the vehicle 10.

By way of example and not limitation, the location device 40 may be configured to output a location signal 44 indicative of a distance and direction that the vehicle 10 is located relative to the center of the roadway lane on which the vehicle is traveling, i.e. how far offset from the center of the left lane 18L that the vehicle 10 is positioned. The location signal 44 may also include information about the lateral rate that the vehicle 10 is moving laterally toward or away from the center of the roadway lane. Other ways to indicate the lateral position 42 are contemplated, but distance and direction to the center of the lane is presented here only to simplify the explanation of the system 12 described herein.

The system 12 may include a controller 48 configured receive the torque signal 26 (or 26A or 26B) and the position signal 44, and to determine a steering correction 46 to steer the vehicle toward a center of the roadway-lane 18 (e.g. the left lane 18L or the right lane 18R). The steering correction 46 may result in a reduction of the steering torque 32 needed to steer the vehicle 10 toward a center of the roadway-lane 18, or may momentarily take control of steering the vehicle 10 until the vehicle 10 is near the center of the roadway-lane 18. The controller 48 may include a processor (not shown) such as a microprocessor or other control circuitry such as analog and/or digital control circuitry including an application specific integrated circuit (ASIC) for processing data as should be evident to those in the art. The controller 48 may include memory, including non-volatile memory, such as electrically erasable programmable read-only memory (EEPROM) for storing one or more routines, thresholds and captured data. The one or more routines may be executed by the processor to perform steps for assisting the operator 14 with steering the vehicle 10 as described herein.

Those with automobile driving experience will recognize that when operating a typical vehicle (one that is not equipped with the system 12 described herein) in the situation illustrated in Fig. 1 it would, in general, require more steering effort on the part of the operator 14 to steer the vehicle 10 from the left edge of the left lane 18L toward the center of the left lane 18L than would be required to steer the vehicle 10 from the right edge of the left lane 18L toward the center of the left lane 18L when the lateral force 20 is present as illustrated. That is, it takes more effort when steering in opposition to the lateral force 20, and less effort when the steering in cooperation with the lateral force 20, i.e. in the same direction as the lateral force 20. The applicant recognized that it would be advantageous for the controller 48 generate or output a steering correction that is based on both the torque signal 26 (or 26A or 26B) and the lateral position (i.e. the position signal 44).

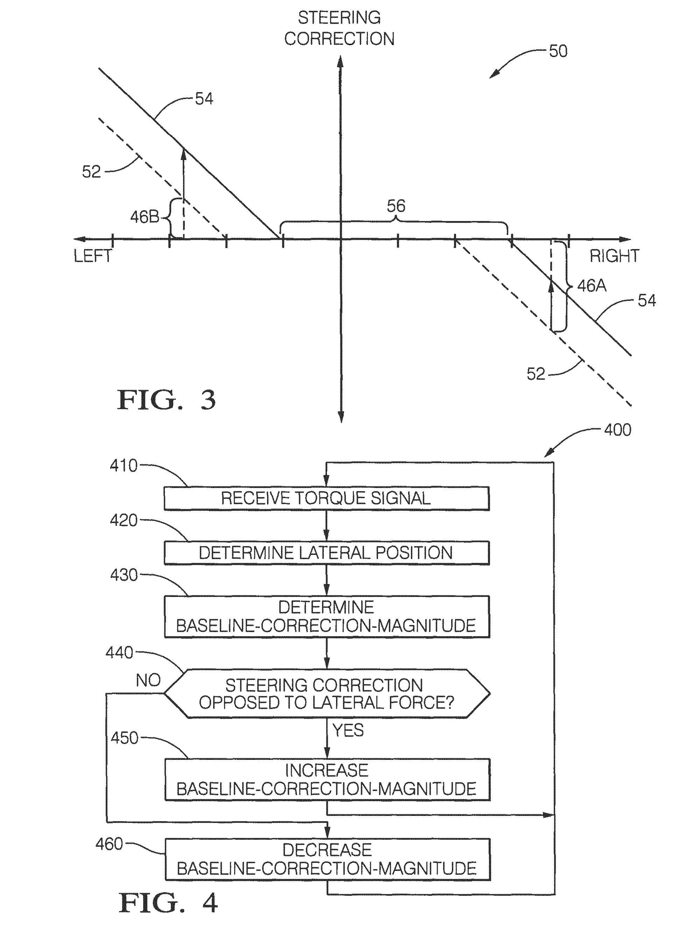

Fig. 3 illustrates a non-limiting example of a graph 50 of the steering correction 46 (Fig. 2) output by the controller 48 or provided by the system 12 at varying lateral positions for system configurations with and without camber/crosswind compensation. The baseline correction 52 is comparable to the steering correction 46 output by the system 12 when the roadway is level (i.e. no camber) and there are no cross winds. The compensated correction 54 is an example of the steering correction 46 at various lateral positions assuming a constant value for the lateral force 20. That is, the baseline-correction-magnitude is the steering correction that would be applied by a lane departure correction system that did not have knowledge of the lateral force 20 because the system did not have a torque sensor or the like.

Accordingly, baseline-correction-magnitude 46A of the steering correction is decreased when the steering correction is directed in cooperation with the lateral force 20, and baseline-correction-magnitude 46B is increased when the steering correction is directed in opposition to the lateral force.

The system 12 may also define a dead-band 56 where no steering correction is performed by the system 12 if the vehicle is close to the center of the roadway lane 18. The width of baseline dead-band (portion of the x-axis between where the baseline correction 52 intersects the x-axis) may be varied in accordance with, but not limited to, vehicle speed or the width of the roadway lane 18. If a lateral force 20 is detected, then the compensated correction 54 shifts the dead-band 56 along the x-axis as illustrated. As such, the steering correction 46 defines or includes a dead-band 56 based on the torque signal 26 and the lateral position 42.

Fig. 4 illustrates a non-limiting example of a method 400 of assisting an operator to steer a vehicle 10. In particular, the method 400 is used, in cooperation with the system 12, to vary an amount of steering effort assistance provided to an operator 14 of the vehicle 10 to help keep the vehicle 10 in or toward the center of a roadway-lane 18. The amount of assistance may vary from merely increasing the power assistance level to providing enough effort to actually steer the vehicle independent of the operator's actions.

Step 410, RECEIVE TORQUE SIGNAL, may include receiving a torque signal 26, or 26A, or 26B from a torque sensor 24, or a steering actuator 34, or a steering box 36, respectively. In general, the torque signals 26, 26A, 26B are indicative of a lateral force 20 experienced by the vehicle 10.

Step 420, DETERMINE LATERAL POSITION, may include determining a lateral position 42, which may include a lateral rate, of the vehicle relative to a roadway lane. An imaging device (not shown) such as a camera may be used to determine the position of the vehicle 10 relative to roadway markers such as lines painted on the roadway 16, or other objects such a guardrails proximate to the roadway 16. Alternatively, GPS may be used to determine the lateral position 42.

Steps 430-460 cooperate to determine a steering correction to steer the vehicle toward a center of the roadway lane, where the steering correction is based on the torque signal and the lateral position from steps 410 and 420.

Step 430, DETERMINE BASELINE-CORRECTION-MAGNITUDE, may include using lateral position 42 by itself to determine a base-line correction magnitude necessary to assist the operator and/or autonomously steer the vehicle 10 to the center of the left lane 18L for the situation illustrated in Fig. 1. Other signals that may be used to determine a base-line correction magnitude include, but are not limited to a turn signal, accelerator pedal, and brake pedal operation, validity of the lane markers, map database matching, and electronic horizon information. Additional information other than lateral position may be used to anticipate steering corrections needed for upcoming curves, banking, exit ramps, etc. that could further draw lateral force information.

Step 440, STEERING CORRECTION OPPOSED TO LATERAL FORCE?, may include comparing the direction of the lateral force 20 to the lateral position 42. If the direction of the steering correction 46 is against or in opposition to the lateral force 20 (YES), then the method 400 proceeds to step 450. Otherwise (NO), the method 400 proceeded to step 460.

Step 450, INCREASE BASELINE-CORRECTION-MAGNITUDE, may include increasing a baseline-correction-magnitude when the steering correction is directed in opposition to the lateral force

Step 460, DECREASE BASELINE-CORRECTION-MAGNITUDE, may include decreasing the baseline-correction-magnitude when the steering correction is directed in cooperation with the lateral force

Accordingly, a steering assist system (the system 12), a controller 48 for the system 12, and a method 400 to assist an operator to steer a vehicle is provided. By determining an indication of the lateral force 20 through the torque sensor 24 (or the like), a better estimation of the effects of camber and crosswinds on steering correction can be made so that the steering of the vehicle is more refined without asymmetric control behavior that would be present in a system not accounting for camber and/or crosswind.

While this invention has been described in terms of the preferred embodiments thereof, it is not intended to be so limited, but rather only to the extent set forth in the claims that follow.

## Claims

1. A steering assist system (12) configured to assist an operator (14) to steer a vehicle (10), said system (12) comprising:
a torque sensor (24) configured to output a torque signal (26) indicative of a lateral force (20) experienced by the vehicle (10);
a location device (40) configured to determine a lateral position (42) of the vehicle (10) relative to a roadway (16); and
a controller (48) configured to determine a steering correction (46) to steer the vehicle (10) toward a center of a roadway lane (18), wherein the steering correction (46) is based on the torque signal (26) and the lateral position (42).

2. The system (12) in accordance with claim 1, wherein a baseline-correction-magnitude (46A, 46B) of the steering correction (46) is increased when the steering correction (46) is directed in opposition to the lateral force (20), and is decreased when the steering correction (46) is directed in cooperation with the lateral force (20).

3. The system (12) in accordance with claim 1 or 2, wherein the steering correction (46) includes a dead-band (56) based on the torque signal (26) and the lateral position (42).

4. The system (12) in accordance with any one of claims 1 to 3, wherein the torque sensor (24) is configured to determine a steering torque (32) applied to a hand-wheel (28) of the vehicle (10) by an operator (14) of the vehicle (10) in opposition to the lateral force (20).

5. The system (12) in accordance with any one of claims 1 to 4, wherein the torque sensor (24) is configured to determine a steering torque (32) applied to a steering box (36) of the vehicle (10) by a steering actuator (34) of the vehicle (10) in opposition to the lateral force (20).

6. A method (400) of assisting an operator (14) to steer a vehicle (10), said method (400) comprising:
receiving a torque signal (26) from a torque sensor (24), wherein the torque signal (26) is indicative of a lateral force (20) experienced by the vehicle (10);
determining a lateral position (42) of the vehicle (10) relative to a roadway lane (18); and
determining a steering correction (46) to steer the vehicle (10) toward a center of the roadway lane (18), wherein the steering correction (46) is based on the torque signal (26) and the lateral position (42).

7. The method (400) in accordance with claim 6, wherein the step (410) of determining the steering correction (46) includes
increasing a baseline-correction-magnitude (46A, 46B) when the steering correction (46) is directed in opposition to the lateral force (20); and
decreasing the baseline-correction-magnitude (46A, 46B) when the steering correction (46) is directed in cooperation with the lateral force (20).
